# EUROPÄISCHE PATENTSCHRIFT

(11) **EP 2 452 796 B1**
(45) Veröffentlichungstag und Bekanntmachung des Hinweises auf die Patenterteilung: **22.06.2016**
(21) Anmeldenummer: 11189455.6
(22) Anmeldetag: 16.11.2011
(51) Int. Cl.: B29C 33/38

(54) **Werkzeughälfte für ein Formwerkzeug und Verfahren zu deren Herstellung**
Tool half for a moulding tool and method for its production
Moitié d'outil pour un outil de formage et son procédé de fabrication

(30) Priorität: 16.11.2010 DE 102010060578
(43) Veröffentlichungstag der Anmeldung: 16.05.2012
(73) Patentinhaber: Willi Lauber GmbH, 35745 Herborn (DE)
(72) Erfinder: Rompf, Matthias, 35767 Breitscheid-Erdbach (DE)
(74) Vertreter: Patentanwälte Olbricht Buchhold Keulertz

(56) Entgegenhaltungen:
- DE-A1-102007 037 701
- FR-A1- 2 642 341
- JP-A- 2002 336 922
- JP-A- 2010 173 317

## Beschreibung

Die Erfindung betrifft gemäß dem Oberbegriff von Anspruch 1, ein Verfahren zur Herstellung einer Werkzeughälfte für ein Formwerkzeug, die wenigstens teilweise aus Beton gefertigt ist, und ein Konturteil aus vorzugsweise einem Metall, zur Formgebung eines mit der Werkzeughälfte zu fertigenden Werkstücks aufweist. Weiterhin betrifft sie entsprechend dem Oberbegriff von Anspruch 7 eine Werkzeughälfte für ein Formwerkzeug, die wenigstens teilweise aus Beton besteht und ein Konturteil aus vorzugsweise einem Metall, zur Formgebung eines mit der Werkzeughälfte zu fertigenden Werkstücks aufweist.

Formwerkzeuge dienen insbesondere der Herstellung von Kunststoff- und Metallteilen bei mittleren bis hohen Stückzahlen eines Werkstücks. Eingebaut in einer Werkzeugmaschine ergeben zwei Werkzeughälften ein öffnen- und schließbares Formwerkzeug, wobei den Anforderungen entsprechend hohe Schließkräfte zwischen den Werkzeughälften aufgebracht werden. Damit keine Verformungen der Werkzeughälften während des formgebenden Prozesses auftreten, die zu Maßabweichungen der Werkstücke und somit schlechter Qualität führen, sind diese zur Aufnahme und Weiterleitung der Kräfte sehr steif und massiv. Deshalb werden die Werkzeughälften zumeist einteilig aus massiven Metallblöcken durch zerspanende Bearbeitung gefertigt. Hierbei geht sehr viel Material durch die Zerspanung verloren und die Herstellung einer solchen Formhälfte dauert sehr lange. Bei steigenden Rohstoffpreisen für Metall entstehen hohe Herstellungskosten für die Werkzeughälften und damit auch für die Formwerkzeuge, was alternative Werkzeugkonzepte zunehmend interessant macht.

Werkzeughälften, die wenigstens teilweise aus kostengünstigerem Beton hergestellt werden sind in JP 2002 336 922 A beschrieben. Die eigentliche formgebende Oberfläche wird aus Metall hergestellt und durch senkrechte Stäbe auf einer Platte abgestützt. Die Zwischenräume sind mit Beton ausgefüllt.

JP 2010 173 317 A offenbart eine weitere Variante einer Formhälfte und dessen Herstellung, die weniger Metall benötigt. Hierbei wird die äußere ausgehärtete Oberfläche eines mit Beton gefüllten Rahmens mit einer Metallhülle überzogen. Dabei wird die formgebende Metalloberfläche zusätzlich von Verstärkungen, die in den Beton eingegossen sind, vor möglichen Deformationen im Herstellungsprozess des Formwerkzeugs geschützt.

Das Dokument FR 2642 341 A1 zeigt eine weitere mögliche Modifikation anhand eines Stanzwerkzeugs, wobei das Konturenteil aus einem Polymerisationskunststoff hergestellt ist. Eine Bewehrung, aus vertikalen und horizontalen Stäben die in die Kunststoffoberfläche eingebettet sind, stützt das Konturenteil. Wiederrum sind die Zwischenräume mit einem Füllstoff ausgefüllt, der beispielsweise Beton sein kann.

DE 10 2007 037 701 A1 beschreibt eine Gussform und ein Herstellungsverfahren für eine Gussform. Diese besteht dabei aus mehreren Werkzeughälften zum Herstellen von Gussteilen in einer Gießmaschine, die während eines Gießvorganges zusammenwirken. Wenigstens eine der Werkzeughälften ist dabei zumindest teilweise aus einem Hochleistungsbeton hergestellt.

Hochleistungsbeton hat eine Druckfestigkeit von über 60 N/mm² und weist eine hohe Dichte auf. Verwendung findet dieser üblicherweise bei hohen Beanspruchungen in der Bauindustrie. Seine Eigenschaften verhelfen den Werkzeughälften zu einer ausreichenden Widerstandskraft, um den Drücken in Gießmaschinen zu widerstehen. Zudem ist dieser Hochleistungsbeton besonders schwindarm.

Ein ebenfalls aus dem Stand der Technik bekannter mit kleinen Stahlfasern verstärkter Hochleistungsbeton kommt dann zum Einsatz wenn die Erhöhung der Festigkeit der Werkzeughälfte unabdingbar ist.

In einer Ausführungsform der DE 10 2007 037 701 A1 besteht die Werkzeughälfte aus einem Trägerteil und einem in diesem eingebetteten Konturteil. Das Trägerteil übernimmt im Wesentlichen die Führung und die Aufnahme der Werkzeughälfte in der Gießmaschine. Weiterhin stützt es das Konturteil bei der Belastung durch Kräfte während des Gießvorganges. Dabei sind das Träger- und das Konturteil unlösbar, lösbar und/oder austauschbar verbunden und aus unterschiedlichen Materialien, insbesondere das Trägerteil aus Hochleistungsbeton und das Konturteil aus Metall. Gröbere Toleranzen bei der Fertigung des Trägerteils ergeben Kostenvorteile.

Bei dem Gießen der Werkzeughälfte aus Hochleistungsbeton, werden in das Trägerteil optional Funktionselemente wie Halterungsnuten, Führungen und Kanälen eingegossen. Mit entsprechenden Schalungen und Bauteilen erfolgt bereits vor dem Gießen eine Positionierung im Trägerteil. Zum Einsatz kommt dabei eine wieder verwendbare Schalung oder aber ein zur Werkzeughälfte gehörender Kasten. In der Schalung oder dem Kasten härtet der Hochleistungsbeton anschließend aus. Nach der Aushärtung erfolgt optional eine Nachbearbeitung des Hochleistungsbetons und/oder des Konturteils durch Schleifen und/oder Fräsen.

Nachteilig im Stand der Technik ist jedoch die mangelhafte Einleitung der auftretenden Kräfte in das Trägerteil. Beim Austrocknen schwindet der Beton. Auch bei einer geringen Schwindung entstehen ungleichmäßige Spalte, wodurch die Anlagefläche zwischen Konturteil und Trägerteil ungleichmäßig ist. Auch durch Alterung und Belastungen sackt Beton nach und das Konturteil sinkt aufgrund der zurückweichenden Beton-Anlagefläche in das Trägerteil ein. Es entstehen weitere ungleichmäßige Spalte mit der Folge inhomogener Stützung des Konturteils. Hierdurch verformt sich das Trägerteil unter den auftretenden Kräften ungleichmäßig. Ein derartiges Formwerkzeug kann somit nicht zur Fertigung von Bauteilen mit engen Toleranzgrenzen eingesetzt werden und führt im Extremfall durch Eigenverformung zu einer Undichtigkeit während des Spritzgießprozess.

Weiterhin sind sowohl die Übergangsbereiche von dem Konturteil in das Trägerteil, als auch vom Trägerteil in die Werkzeugmaschine empfindlich gegen Rissbildung, da hier große Spannungsspitzen auftreten. Insbesondere eignet sich Beton sehr schlecht für die Aufnahme von Zugkräften. Derartige Zugkräfte treten zum Beispiel beim Auf- und Zufahren eines Formwerkzeuges auf. Letztlich verursacht die Verwendung von Hochleistungsbeton auch relativ hohe Kosten und lange Betontrocknungszeiten.

Aufgabe der vorliegenden Erfindung ist es, die Nachteile des Standes der Technik zu beseitigen. Insbesondere soll ein Werkzeughälfte mit einem Betonanteil und ein Verfahren zur Herstellung einer derartigen Werkzeughälfte geschaffen werden, welche eine höhere Steifigkeit aufweist und die Prozesskräfte besser aufnimmt und weiterleitet, sodass sich die Qualität der mit ihr gefertigten Werkstücke erheblich verbessert. Weiterhin soll die Werkzeughälfte lange Standzeiten und hohe Produktionsstückzahlen erreichen. Eine einfache Handhabbarkeit und eine wirtschaftliche und schnelle Herstellbarkeit soll ebenso Beachtung finden.

Hauptmerkmale des erfindungsgemäßen Verfahrens sind im kennzeichnenden Teil von Anspruch 1 angegeben. Ausgestaltungen sind Gegenstand der Ansprüche 2 bis 6. Die Hauptmerkmale der erfindungsgemäßen Werkzeughälfte finden sich im kennzeichnenden Teil des Anspruchs 7. Zugehörige Ausgestaltungsvarianten sind den Ansprüchen 8 bis 14 entnehmbar.

Die Erfindung betrifft ein Verfahren zur Herstellung einer Werkzeughälfte für ein Formwerkzeug, die wenigstens teilweise aus Beton gefertigt ist, und ein Konturteil aus vorzugsweise einem Metall, zur Formgebung eines mit der Werkzeughälfte zu fertigenden Werkstücks aufweist, wobei eine Unterkonstruktion mit dem Konturteil derart verbunden und wenigstens teilweise von Beton umschlossen wird, dass während eines formgebenden Prozesses Kräfte vom Konturteil durch die Unterkonstruktion auf den Beton übertragbar sind und dass die Unterkonstruktion wenigstens zwei Aufnahmen aufweist.

Zwei Werkzeughälften bilden in der Regel ein Formwerkzeug. Die zweite Werkzeughälfte kann ebenfalls eine erfindungsgemäße Werkzeughälfte oder aber eine anderweitig hergestellte sein. Bestimmte Werkstücke sind auch mit nur einer Werkzeughälfte und einem einfachen Gegenlager, zum Beispiel einer Stahlplatte, herstellbar.

Durch die im Beton angeordnete Unterkonstruktion, erreicht die erfindungsgemäße Werkzeughälfte eine besonders hohe Steifigkeit und macht sie in Spritzgieß, Stanz-, Umform- und Urformwerkzeugen einsetzbar.

Die Unterkonstruktion kann hierfür aus Stahl, Betonstahl, Aluminium, Nichteisen-Metall, Kohlefaser oder aus einer Kombination von diesen gefertigt werden. Je nach Belastungs- und weiteren Anforderungen, kann die Unterkonstruktion somit derart ausgestaltet werden, dass während eines formgebenden Prozesses Kräfte vom Konturteil durch die Unterkonstruktion möglichst gut auf den Beton übertragbar sind und eine langlebige Funktion gewährleistet ist.

Vorteilhaft ist an der Unterkonstruktion auch die wesentlich verbesserte Aufnahme und Weiterleitung der auf das Konturteil wirkenden Kräfte. Derartige Kräfte treten bei der Fertigung von Werkstücken auf, da entweder beim Schließen selbst eine Umformkraft, oder aber im geschlossenen Zustand eine Schließkraft vorliegt, um beispielsweise ein Austreten von in das Formwerkzeug eingespritztem Material zu verhindern. Die Kräfte auf das Konturteil verteilen sich nunmehr über die Unterkonstruktion gleichmäßig in der Werkzeughälfte, sodass die Geometrie und Funktionstüchtigkeit über die Lebensdauer gewahrt bleibt. Hohe Fertigungsstückzahlen und lange Werkzeugstandzeiten bei einer hohen Fertigungsqualität werden so erreicht, denn es tritt kein Einsinken des Konturteils im Beton auf.

Das Konturteil und die Unterkonstruktion sind getrennt von einander fertigbar. Lediglich das Konturteil erfordert eine Fertigung mit engen Toleranzen und erfolgt üblicherweise aus einem massiven Block des verwendeten Rohmaterials. Die Erstellung der Unterkonstruktion kann beispielsweise mit Halbzeugen wie Rohren, Stäben und ähnlichem, sowie in Kombination von Beton und Stahl (Stahlbeton) erfolgen. Dementsprechend fällt in der Summe der Herstellung von Konturteil und Unterkonstruktion nur geringer Materialverschnitt an und die Bearbeitung erfolgt schnell und kostengünstig. Zudem ergibt sich aus den geringen Gewichten der Einzelteile eine einfache Handhabung während der Fertigung.

Die Umschließung der Unterkonstruktion durch Beton ist mittels Einbringung dieser und gegebenenfalls des Konturteils in eine Schalung ebenfalls ökonomisch durchführbar. Die Schalung kann dabei Bestandteil der späteren Werkzeughälfte sein oder später vom Beton gelöst werden, vorzugsweise zur Wiederverwendung. Eine derartige lösbare Schalung besteht in der Regel aus einem Schaltisch und einer Einfassung, wobei letztere insbesondere aus Schaltafeln, zugehörigen Verstärkungen und Verspannelementen gefertigt und auf oder an dem Schaltisch positioniert wird.

Der Beton muss meist nicht nachbearbeitet werden, da unmittelbar dessen Endform durch die Schalung vorgebbar ist. Zudem verringern sich aufgrund der Verbindung des Konturteils mit der Unterkonstruktion Fertigungsungenauigkeiten hinsichtlich der Konturteilposition, die sich aus einer Schwindung des Betons beim Trocknungsprozess ergeben. Dies reduziert unter anderem die Nacharbeit am Konturteil. Insgesamt ergibt sich so aus erfindungsgemäßem Verfahren eine wirtschaftliche und schnelle Herstellbarkeit.

Eine Ausführungsform der Erfindung sieht vor, dass die Unterkonstruktion derart ausgelegt wird, dass die Kräfte vom Konturteil ausschließlich durch diese auf den Beton übertragbar sind. Die Position des Konturteils und die Aufnahme der Kräfte in der Werkzeughälfte sind somit unabhängig davon, ob an das Konturteil angrenzender Beton während des Trocknungsprozesses schwindet oder durch Alterung nachsackt. Eine direkte Kraftübertragung vom Konturteil auf den Beton ist nicht erforderlich. Die Positionsgenauigkeit des Konturteils und die Aufnahme der Kräfte sind stets gewährleistet und eine hohe Qualität der Werkstücke über die gesamte Einsatzzeit der Werkzeughälfte sichergestellt.

Besondere Vorteile ergeben sich, wenn als Beton ein Standardbeton verwendet wird, dessen Druckfestigkeit sich vorzugsweise in dem Bereich der Temperaturen beim formgebenden Prozess des Formwerkzeugs nicht wesentlich verändert. Dies kann beispielsweise ein C40/50 Beton sein. Im Gegensatz zur Verwendung von Hochleistungsbeton fallen erfindungsgemäß deutlich geringere Materialkosten für den Beton an und auch die gesamten Herstellkosten sind geringer. Insbesondere kann ein derartiger Standardbeton schneller aushärten als ein Hochleistungsbeton, ohne dass Risse entstehen. Auch bei Temperatur- und Belastungsschwankungen während eines formgebenden Prozesses kommt es bei erfindungsgemäßer Verwendung von Standardbeton nicht zu plastischen Verformungen und Druckfestigkeitsunterschieden des Betons, wodurch dieser die Unterkonstruktion und das Konturteil stets ausreichend stabilisiert. Die Qualität von zu fertigenden Werkstücken ist somit unabhängig von den Temperaturen beim formgebenden Prozess und über die gesamte Lebensdauer der Werkzeughälfte gleichmäßig, obwohl kein Hochleistungsbeton verwendet wird.

Erfindungsgemäß kann vorgesehen sein, dass weitere Bauteile in dem Beton angeordnet werden, insbesondere Führungen, eine Bewehrung, Rohre, Kanäle, Heizschleifen, Lastösen, Gewindebuchsen, Stoßkanten, Temperaturfühler oder Feuchtigkeitssensoren. Diese werden entweder vom Beton umgossen oder nachträglich eingebracht, bevorzugt jedoch ersteres, da dies eine hohe Anordnungs- und Gestaltungsfreiheit der weiteren Bauteile erlaubt. Durch eine mögliche teilweise Verbindung der weiteren Bauteile, gegebenenfalls auch mit dem Konturteil oder der Unterkonstruktion, kann eine Positionierung der Bauteile zueinander erfolgen. Nach dem Aushärten befinden sich diese dann an dem vorgesehenen Ort an oder in der Werkzeughälfte.

Dabei dienen die Werkzeugaufnahmeelemente der Aufnahme und der Befestigung der Werkzeughälfte in einer Maschine. Die Führungen hingegen eignen sich dazu, die Werkzeughälfte bei einem Verschließen des Formwerkzeugs in die korrekte Schließstellung zu führen. Durch eine Bewehrung oder Rohre kann die Steifigkeit des Werkzeugs weiter erhöht und auch die Schwindung des Betons verringert werden. Außerdem können diese Rohre dazu geeignet sein, Schieber oder Schieberanschlüsse zur Fertigung komplexer Werkstücke aufzunehmen. Weiterhin dienen mögliche Kanäle einer Einbringung von Rohmaterial in das Formwerkzeug oder als Kühlmittelkanäle zur Temperierung. Auch Heizschleifen helfen die Werkzeughälfte auf eine optimale Temperatur einzustellen. Lastösen vereinfachen ein Anheben der Werkzeughälfte zur Durchführung von Transporten und vermeiden Beschädigungen durch eine falsche Auswahl der Kraftansatzpunkte. Stoßleisten verhindern zusätzlich mögliche Schäden am Werkzeug beim Transport. Das Vorsehen von Gewindebuchsen erlaubt eine einfache Anbringung weiterer Bauteile an der Werkzeughälfte. Temperaturfühler eignen sich weiterhin zur Temperaturüberwachung der Werkzeughälfte und macht diese einstellbar. Dazu können Feuchtigkeitssensoren die Feuchtigkeit im Beton ermitteln.

Diese Bauteile können helfen, eine erfindungsgemäße Werkzeughälfte variabel gemäß den Anforderungen entsprechend zu gestalten. Hierdurch ist eine hohe Fertigungsqualität der Werkstücke auch bei langen Werkzeugstandzeiten und hohen Produktionsstückzahlen gewährleistet. Die Anordnung im Beton erfordert dabei einen geringen Aufwand und es entstehen geringe Kosten.

Besonders vorteilhaft ist es, wenn der Beton zum Aushärten temperiert wird, vorzugsweise indem ein erwärmtes Fluid durch in die Werkzeughälfte eingebrachte Heizschleifen geleitet wird. Alternativ oder ergänzend kann auch eine Temperierung zur Aushärtung in einer Trocknungskammer erfolgen. Der Trocknungsprozess des Betons lässt sich nunmehr gezielt steuern und schneller durchführen. Mit Hilfe einer optionalen Mess- und Regeleinheit und Temperaturfühlern sowie gegebenenfalls Feuchtigkeitssensoren, ist der Trocknungsprozess sogar regelbar. Vorzugsweise erfolgt eine Temperierung des Betons auf über 80°C, da hierbei ein Dampfdruck entsteht, bei dem im Beton befindliches Wasser schnell aus dem Beton austritt. Es verbleibt im Beton der Werkzeughälfte eine derart kleine Restmenge Wasser, dass keine weiteren maßlichen Änderungen durch Schwindung des Betons erfolgen, wodurch sich eine Qualitätssicherung ergibt. Der Beton ist weiterhin schnell belastbar und blockiert seinen Fertigungsplatz nur für eine geringe Zeit. Erfindungsgemäß ist somit sichergestellt, dass die Fertigungskosten gering sind.

In einer Variante der Erfindung ist vorgesehen, dass die Heizschleifen derart ausgelegt werden, dass diese sowohl für eine Temperierung des Betontrocknungsprozesses als auch für eine spätere Temperierung des Formwerkzeugs beim formgebenden Prozess geeignet sind. Somit werden keine zwei unabhängigen Heizschleifen im Beton benötigt. Es ergeben sich geringere Kosten und eine niedrigere Komplexität der Werkzeughälfte.

Vorteilhaft ist auch eine Ausgestaltung der Erfindung derart, dass ein Anschlussteil aus Metall, zur Übertragung von Kräften zwischen der Werkzeughälfte und einer Maschine angeordnet wird. Das Anschlussteil ist dabei direkt mit der Werkzeughälfte verbunden. Kräfte werden so von der Werkzeughälfte direkt auf das Gegenlager der Maschine übertragen. Das Anschlussteil ist dabei vorzugsweise aus Metall gefertigt. Zudem kann die Werkzeughälfte schneller in der Maschine eingerichtet werden. Da dieses Anschlussteil beispielsweise die Form eines Metallrahmens aufweist. Das Anschlussteil ist sorgt auch bei einer langen Nutzungsdauer dafür, dass kaum Schäden bei der Montage und Demontage der Werkzeughälfte auftreten. Ein Anschlussteil aus Metall eignet sich zudem zur Aufnahme von Zugkräften. Eine gute Kraftein- und - weiterleitung macht eine derartige Werkzeughälfte letztlich für eine Vielzahl von Maschinen einsetzbar.

Besonders bevorzugt wird das Anschlussteil mit der Unterkonstruktion verbunden, sodass diese Kräfte von dem Anschlussteil aufnehmen kann. Auf diese Weise werden die auftretenden Einwirkungen direkt vom Anschlussteil, durch die Unterkonstruktion auf das Konturteil leitbar übertragen. Das Anschlussteil ist durch die Verbindung mit der Unterkonstruktion in seiner Lage zum Konturteil genau positioniert. Betontoleranzen, die sich bspw. aus Schwindvorgängen ergeben, bleiben so außen vor. Eine Nachbearbeitung des Anschlussteils und/oder des Konturteils nach dem Aushärten des Betons ist überflüssig. Das geringe Gewicht der Konstruktion vor dem vergießen mit Beton ermöglicht einen Wechsel zwischen verschiedenen Bearbeitungsstandorten und -werkzeugen. Das vereinfachte Handling führt zu einer schnellen und kostengünstigen Fertigung und ermöglicht, die Arbeitsschritte mit nur einem Hallenkran zu bewerkstelligen.

Grundsätzlich besteht so die Möglichkeit, die ganze Werkzeughälfte exklusive des Betons als Gerüst mit allen Abmessungen aufzubauen, und dann mit Beton zu umgießen, um die notwendige Steifigkeit zu erreichen. Zusätzliche Nachbearbeitungen der anschließend vollständigen und schweren Werkzeughälfte fallen nicht an, was die Herstellungskosten reduziert.

In einer Ausgestaltungsvariante der Erfindung wird die Unterkonstruktion derart ausgelegt, dass auf das Anschlussteil wirkende Kräfte ausschließlich durch die Unterkonstruktion aufnehmbar sind und Anteile der Kräfte ohne Einleitung in den Beton direkt durch die Unterkonstruktion und das Konturteil übertragen werden. Dies macht die Aufnahme der Kräfte von der Werkzeughälfte unabhängig davon, ob an das Anschlussteil angrenzender Beton während des Trocknungsprozesses schrumpft oder durch Alterung von diesem zurückweicht. Eine direkte Kraftübertragung vom Anschlussteil auf den Beton ist somit nicht erforderlich, wobei der Kraftfluss auch umgekehrt erfolgen kann. Die Positionsgenauigkeit des Konturteils und des Anschlussteils wird genauso gewährleistet wie die Aufnahme und Weiterleitung der Kräfte. Hierdurch ist eine hohe Qualität der Werkstücke über die gesamte Einsatzzeit der Werkzeughälfte sichergestellt. Durch die vorliegende, gleichmäßig verteilte Kraftübertragung von der Unterkonstruktion auf den Beton kann auf Grund der geringen Spannungsspitzen, ein Beton mit einer niedrigeren Druckfestigkeit verwendet werden.

Die Erfindung betrifft weiterhin eine Werkzeughälfte für ein Formwerkzeug, die wenigstens teilweise aus Beton besteht und ein Konturteil aus vorzugsweise einem Metall, zur Formgebung eines mit der Werkzeughälfte zu fertigenden Werkstücks aufweist, wobei eine Unterkonstruktion mit dem Konturteil derart verbunden und wenigstens teilweise von Beton umschlossen ist, dass während eines formgebenden Prozesses Kräfte vom Konturteil durch diese auf den Beton übertragbar sind.

Zwei Werkzeughälften bilden in der Regel ein Formwerkzeug. Die zweite Werkzeughälfte kann ebenfalls eine erfindungsgemäße Werkzeughälfte oder aber eine anderweitig hergestellte sein. Bestimmte Werkstücke sind auch mit nur einer Werkzeughälfte und einem einfachen Gegenlager, zum Beispiel einer Stahlplatte, herstellbar.

Durch die im Beton angeordnete Unterkonstruktion, erreicht die Werkzeughälfte eine besonders hohe Steifigkeit und macht sie in Spritzgieß, Stanz-, Umform- und Urformwerkzeugen einsetzbar.

Vorteilhaft ist an der Unterkonstruktion auch die wesentlich verbesserte Aufnahme und Weiterleitung der auf das Konturteil wirkenden Kräfte. Derartige Kräfte treten bei der Fertigung von Werkstücken auf, da entweder beim Schließen selbst eine Umformkraft, oder aber im geschlossenen Zustand eine Schließkraft vorliegt, um beispielsweise ein Austreten von in das Formwerkzeug eingespritztem Material zu verhindern. Die Kräfte auf das Konturteil verteilen sich nunmehr über die Unterkonstruktion gleichmäßig in der Werkzeughälfte, sodass die Geometrie und Funktionstüchtigkeit über die Lebensdauer gewahrt bleibt. Hohe Fertigungsstückzahlen und lange Werkzeugstandzeiten bei einer hohen Fertigungsqualität werden so erreicht, denn es tritt kein Einsinken des Konturteils im Beton auf.

Das Konturteil und die Unterkonstruktion sind getrennt von einander fertigbar. Lediglich das Konturteil erfordert eine Fertigung mit engen Toleranzen und erfolgt üblicherweise aus einem massiven Block des verwendeten Rohmaterials. Die Unterkonstruktion besteht beispielsweise aus Halbzeugen wie Rohren, Stäben und ähnlichem. Dementsprechend fällt in der Summe der Herstellung von Konturteil und Unterkonstruktion nur geringer Materialverschnitt an und die Bearbeitung erfolgt schnell und kostengünstig. Zudem ergibt sich aus den geringen Gewichten der Einzelteile eine einfache Handhabbarkeit während der Fertigung.

Die Umschließung der Unterkonstruktion durch Beton ist mittels Einbringung dieser und gegebenenfalls des Konturteils in eine Schalung ebenfalls ökonomisch durchführbar. Die Schalung kann dabei Bestandteil der späteren Werkzeughälfte sein oder später vom Beton gelöst werden, vorzugsweise zur Wiederverwendung nicht zerstörend. Eine derartige lösbare Schalung besteht in der Regel aus einem Schaltisch und einer Einfassung, wobei letztere insbesondere aus Planken, Plankenverstärkungen und Verspannelementen gefertigt und auf oder an dem Schaltisch positioniert wird.

Der Beton muss meist nicht nachbearbeitet werden, da unmittelbar dessen Endform durch die Schalung vorgebbar ist. Zudem verringern sich aufgrund der Verbindung des Konturteils mit der Unterkonstruktion Fertigungsungenauigkeiten hinsichtlich der Konturteilposition, die sich aus einer Schwindung des Betons beim Trocknungsprozess ergeben. Dies reduziert unter anderem die Nacharbeit am Konturteil. Insgesamt ergibt sich so eine wirtschaftliche und schnelle Herstellbarkeit.

Vorzugsweise besteht die Unterkonstruktion aus Stahl, Betonstahl, Aluminium, Nichteisen-Metall, Kohlefaser oder aus einer Kombination von diesen. Je nach Belastungs- und weiteren Anforderungen, kann die Unterkonstruktion somit derart ausgestaltet werden, dass während eines formgebenden Prozesses Kräfte vom Konturteil durch die Unterkonstruktion möglichst gut auf den Beton übertragbar sind und eine langlebige Funktion gewährleistet ist.

Gemäß einer Ausführungsform ist die Unterkonstruktion derart ausgelegt, dass die Kräfte vom Konturteil ausschließlich durch diese auf den Beton übertragbar sind. Die Position des Konturteils und die Aufnahme der Kräfte in der Werkzeughälfte sind somit unabhängig davon, ob an das Konturteil angrenzender Beton während des Trocknungsprozesses schwindet oder durch Alterung nachsackt. Eine direkte Kraftübertragung vom Konturteil auf den Beton ist nicht erforderlich. Die Positionsgenauigkeit des Konturteils und die Aufnahme der Kräfte sind stets gewährleistet und eine hohe Qualität der Werkstücke über die gesamte Einsatzzeit der Werkzeughälfte sichergestellt.

Es besteht die Möglichkeit, dass zwischen dem Konturteil und dem ausgetrockneten Beton wenigstens teilweise ein Spalt ist. Dies tritt regelmäßig durch Schwindung und Alterung des Betons auf und führt ohne eine Unterkonstruktion zu einem Ausfall des Werkzeugs. Die erfindungsgemäße Unterkonstruktion stützt das Konturteil in solch einer Situation weiterhin ausreichend ab und die Position des Konturteils ist unveränderlich. Die Werkzeughälfte verfügt, so ausgestaltet, über eine hohe Lebensdauer bei hohen Produktionsstückzahlen.

Erfindungsgemäß kann auch vorgesehen sein, dass im Beton eine Bewehrung vorhanden ist, die mit der Unterkonstruktion verbunden ist. Dabei kann sie unter anderem aus horizontalen, vertikalen und diagonalen Streben bestehen. Eine derartige Bewehrung verbessert die Übertragung der Kräfte auf den Beton, sodass bei gleichmäßiger Belastung der gesamten Werkzeughälfte lokal sehr geringe Spannungsspitzen auftreten. Die Werkzeughälfte ist belastbarer und zudem leichter. Durch den Einsatz einer Bewehrung ist außerdem die Schwindung des Betons schwächer. Schwindrisse werden vermieden.

Entsprechend einer Erfindungsvariante sind weitere Bauteile angeordnet, insbesondere Werkzeugaufnahmeelemente und/oder Führungen und/oder Rohre und/oder Kanäle und/oder Heizschleifen und/oder Lastösen und/oder Gewindebuchsen und/oder Stoßkanten und/oder Temperaturfühler und/oder Feuchtigkeitssensoren. Diese werden entweder vom Beton umgossen oder nachträglich eingebracht, bevorzugt jedoch ersteres, da dies eine hohe Anordnungs- und Gestaltungsfreiheit der weiteren Bauteile erlaubt. Durch eine mögliche teilweise Verbindung der weiteren Bauteile, gegebenenfalls auch mit dem Konturteil oder der Unterkonstruktion, kann eine Positionierung der Bauteile zueinander erfolgen. Nach dem Aushärten befinden sich diese dann an dem vorgesehenen Ort an oder in der Werkzeughälfte.

Dabei dienen die Werkzeugaufnahmeelemente der Aufnahme und der Befestigung der Werkzeughälfte in einer Maschine. Die Führungen hingegen eignen sich dazu, die Werkzeughälfte bei einem Verschließen des Formwerkzeugs in die korrekte Schließstellung zu führen. Durch Rohre kann die Steifigkeit des Werkzeugs weiter erhöht und auch die Schwindung des Betons verringert werden. Außerdem können diese Rohre dazu geeignet sein, Schieber oder Schieberanschlüsse zur Fertigung komplexer Werkstücke aufzunehmen. Weiterhin dienen mögliche Kanäle einer Einbringung von Rohmaterial in das Formwerkzeug oder als Kühlmittelkanäle zur Temperierung. Auch Heizschleifen helfen die Werkzeughälfte auf eine optimale Temperatur einzustellen. Lastösen vereinfachen ein Anheben der Werkzeughälfte zur Durchführung von Transporten und vermeiden Beschädigungen durch eine falsche Auswahl der Kraftansatzpunkte. Stoßleisten verhindern zusätzlich mögliche Schäden am Werkzeug beim Transport. Das Vorsehen von Gewindebuchsen erlaubt eine einfache Anbringung weiterer Bauteile an der Werkzeughälfte. Temperaturfühler eignen sich weiterhin zur Temperaturüberwachung der Werkzeughälfte und macht diese einstellbar. Dazu können Feuchtigkeitssensoren die Feuchtigkeit im Beton ermittelbar machen.

Mit diesen Bauteilen kann eine erfindungsgemäße Werkzeughälfte variabel an die jeweiligen Anforderungen angepasst werden. Eine hohe Qualität der zu fertigenden Werkstücke ist auch bei langen Werkzeugstandzeiten und hohen Produktionsstückzahlen gewährleistet.

Gemäß einer Ausgestaltung kann die Unterkonstruktion der erfindungsgemäßen Werkzeughälfte aus horizontalen, vertikalen und vorzugsweise auch aus diagonalen Streben bestehen. Somit ist diese optimal an die Anforderungen anpassbar, sodass die Übertragung der Kräfte auf den Beton möglichst gleichmäßig in der Werkzeughälfte erfolgt und eine hohe Werkzeugsteifigkeit vorliegt. Durch Reduktion der lokale Spannungsspitzen im Beton, ist dieser insgesamt stärker belastbar und die Werkzeughälfte langlebig und zur Produktion hoher Stückzahlen einsetzbar.

Erfindungsgemäß weist die Unterkonstruktion wenigstens zwei Aufnahmen auf, über die sie mit dem Konturteil verbunden ist, wobei die Aufnahmen vorzugsweise senkrecht zu dem Konturteil angeordnet sind. Die Übertragung der Kraft vom Konturteil auf die Unterkonstruktion erfolgt nunmehr über deren Aufnahmen. Eine senkrechte Anordnung dieser Aufnahmen relativ zum Konturteil dient der Vermeidung von Drehmomenten auf diese. Die Aufnahmen leiten die Kräfte zunächst unter die Oberfläche des Betons, bevor sie über die Unterkonstruktion im Beton verteilt und auf diesen übertragen werden. Aufgrund geringer Spannungsspitzen bei der Übertragung von Kräften zwischen der Unterkonstruktion und dem Beton ergibt sich eine homogenere Krafteinleitung und eine lange Lebensdauer.

Vorzugsweise sind die gesamten Kräfte des Konturteils auf die Aufnahmen der Unterkonstruktion übertragbar, sodass die Stützung des Konturteils und dessen Position unabhängig von dem an das Konturteil angrenzenden Beton ist. Eine lange Einsatzzeit des Werkzeugs kann so auch bei einer Alterung und einer Schwindung des Betons sichergestellt werden.

Die Verbindung zwischen dem Konturteil und der Unterkonstruktion ist lösbar ausgeführt. Da das Konturteil lösbar ist, kann dieses ausgetauscht werden und es sind unterschiedliche Werkstücke fertigbar, ohne jeweils das Investment für komplette Werkzeuge tätigen zu müssen. Außerdem kann das Konturteil zur Überholung separat zu einem Werkzeugmacher transportiert werden.

Gemäße einer Variante ist vorgesehen, dass die Unterkonstruktion lösbar mit dem Konturteil verbunden und das Konturteil derart von Beton umschlossen ist, dass dieses entnehmbar und gegen ein anderes Konturteil austauschbar ist. Erreichbar ist dies insbesondere durch einen Verzicht auf Hinterschneidungen zwischen dem Konturteil und dem Beton. Durch die Austauschbarkeit sind unterschiedliche Werkstücke fertigbar, ohne jeweils das Investment für komplette Werkzeuge tätigen zu müssen. Außerdem kann das Konturteil zur Überholung separat zu einem Werkzeugmacher transportiert werden, was die Logistikkosten senkt. So ist zum Beispiel zur Einbringung oder Auffrischung einer Narbung im Konturteil nicht das ganze Werkzeug erforderlich.

Eine Ausführungsform sieht weiterhin vor, dass ein Anschlussteil aus Metall, zur Übertragung von Kräften zwischen der Werkzeughälfte und einer Maschine angeordnet ist.

Das Anschlussteil ist dabei direkt mit der Werkzeughälfte verbunden. Kräfte werden so von der Werkzeughälfte direkt auf das Gegenlager der Maschine übertragen. Das Anschlussteil ist dabei vorzugsweise aus Metall gefertigt. Zudem kann die Werkzeughälfte schneller in der Maschine eingerichtet werden. Da dieses Anschlussteil beispielsweise die Form eines Metallrahmens aufweist. Das Anschlussteil ist sorgt auch bei einer langen Nutzungsdauer dafür, dass kaum Schäden bei der Montage und Demontage der Werkzeughälfte auftreten. Ein Anschlussteil aus Metall eignet sich zudem zur Aufnahme von Zugkräften. Eine gute Kraftein- und -weiterleitung macht eine derartige Werkzeughälfte letztlich für eine Vielzahl von Maschinen einsetzbar. Besonders vorteilhaft ist es, wenn das Anschlussteil mit der Unterkonstruktion verbunden ist, sodass diese Kräfte von dem Anschlussteil aufnehmen kann.

Besonders bevorzugt wird das Anschlussteil mit der Unterkonstruktion verbunden, sodass diese Kräfte von dem Anschlussteil aufnehmen kann. Auf diese Weise werden die auftretenden Einwirkungen direkt vom Anschlussteil, durch die Unterkonstruktion auf das Konturteil leitbar übertragen. Das Anschlussteil ist durch die Verbindung mit der Unterkonstruktion in seiner Lage zum Konturteil genau positioniert. Betontoleranzen, die sich bspw. aus Schwindvorgängen ergeben, bleiben so außen vor. Eine Nachbearbeitung des Anschlussteils und/oder des Konturteils nach dem Aushärten des Betons ist überflüssig. Das geringe Gewicht der Konstruktion vor dem Vergießen mit Beton ermöglicht einen Wechsel zwischen verschiedenen Bearbeitungsstandorten und -werkzeugen. Das vereinfachte Handling führt zu einer schnellen und kostengünstigen Fertigung und ermöglicht, die Arbeitsschritte mit nur einem Hallenkran zu bewerkstelligen.

Dabei kann vorgesehen sein, dass auf das Anschlussteil wirkende Kräfte ausschließlich durch die Unterkonstruktion aufnehmbar sind und Anteile der Kräfte ohne Einleitung in den Beton direkt durch die Unterkonstruktion und das Konturteil übertragbar sind.

Grundsätzlich besteht so die Möglichkeit, die ganze Werkzeughälfte exklusive des Betons als Gerüst mit allen Abmessungen aufzubauen, und dann mit Beton zu umgießen, um die notwendige Steifigkeit zu erreichen. Zusätzliche Nachbearbeitungen der anschließend vollständigen und schweren Werkzeughälfte fallen nicht an, was die Herstellungskosten reduziert.

In einer Ausgestaltungsvariante der Erfindung wird die Unterkonstruktion derart ausgelegt, dass auf das Anschlussteil wirkende Kräfte ausschließlich durch die Unterkonstruktion aufnehmbar sind und Anteile der Kräfte ohne Einleitung in den Beton direkt durch die Unterkonstruktion und das Konturteil übertragen werden. Dies macht die Aufnahme der Kräfte von der Werkzeughälfte unabhängig davon, ob an das Anschlussteil angrenzender Beton während des Trocknungsprozesses schrumpft oder durch Alterung von diesem zurückweicht. Eine direkte Kraftübertragung vom Anschlussteil auf den Beton ist somit nicht erforderlich, wobei der Kraftfluss auch umgekehrt erfolgen kann. Die Positionsgenauigkeit des Konturteils und des Anschlussteils wird genauso gewährleistet wie die Aufnahme und Weiterleitung der Kräfte. Hierdurch ist eine hohe Qualität der Werkstücke über die gesamte Einsatzzeit der Werkzeughälfte sichergestellt. Durch die vorliegende, gleichmäßig verteilte Kraftübertragung von der Unterkonstruktion auf den Beton kann auf Grund der geringen Spannungsspitzen, ein Beton mit einer niedrigeren Druckfestigkeit verwendet werden.

Es sind auch noch weitere Ausführungsvarianten der Erfindung möglich. So könnte unter anderem das Anschlussteil und die Unterkonstruktion einteilig hergestellt werden. Weiterhin kann es von Vorteil sein, wenn die Werkzeughälfte derart gestaltet ist, dass in einem geschlossenen Formwerkzeug zwischen dem Beton der Werkzeughälfte und einer zugehörigen zweiten Werkzeughälfte ein Spalt ist. Somit wird der Beton durch das Auf- und Zufahren des Formwerkzeugs nicht durch direkte Stöße beschädigt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 Zwei erfindungsgemäße zusammenwirkende Werkzeughälften; und
Fig. 2 einen Schnitt durch zwei erfindungsgemäße zusammenwirkende Werkzeughälften.

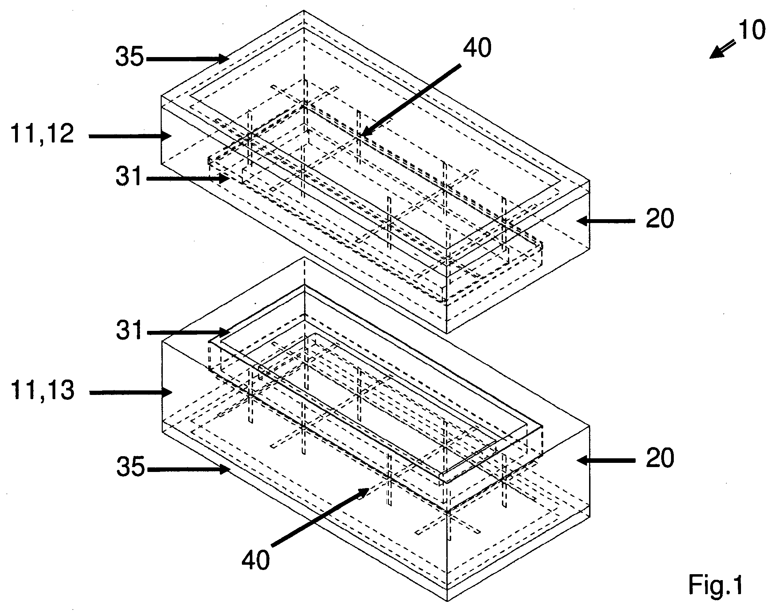

**Fig. 1** zeigt ein Formwerkzeug 10 bestehend aus zwei zusammenwirkenden erfindungsgemäßen Werkzeughälften 11. Die erste Werkzeughälfte 12 ist oberhalb der zweiten Werkzeughälfte 13 angeordnet, was einer geöffneten Stellung in einer Hydraulikmaschine entsprechen könnte, in welcher die zwei Werkzeughälften 12,13 üblicherweise aufgenommen sind.

Dabei bestehen die erste Werkzeughälfte 12 und die zweite Werkzeughälfte 13 jeweils aus einem Konturteil 31, einer Unterkonstruktion 40, einem Anschlussteil 35 und Beton 20. Das Anschlussteil 35 dient der Aufnahme in der Hydraulikmaschine, wohingegen das Konturteil 31 eine Hälfte einer Form für ein Werkstück bildet. Das Konturteil 31 ist mit der Unterkonstruktion 40 verbunden und gemeinsam mit dem Anschlussteil 35 derart in den Beton 20 eingebettet, dass dieser die Unterkonstruktion 40 vollständig bis auf die Verbindung des Konturteils 31 mit der Unterkonstruktion 40 umschließt, sowie das Konturteil 31 und das Anschlussteil 35 jeweils auf wenigstens einer Seite nicht umschlossen sind. Die Unterkonstruktion 40 dient einer Kraftübertragung vom Konturteil 31 auf den Beton 20 oder umgekehrt. Dabei ist sie derart ausgelegt, dass Kräfte vom Konturteil 31 im formgebenden Prozess ausschließlich durch sie auf den Beton 20 übertragen werden können, sodass keine Übertragung von dem Konturteil 31 direkt auf den Beton 20 erfolgen muss.

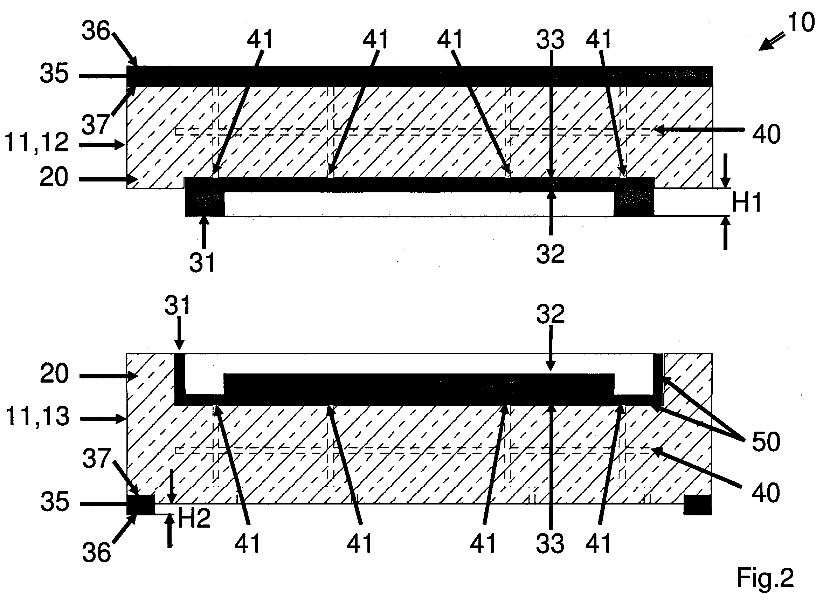

In **Fig. 2** ist ein Formwerkzeug 10 bestehend aus zwei zusammenwirkenden erfindungsgemäßen Werkzeughälften 11 dargestellt. Die erste Werkzeughälfte 12 ist oberhalb der zweiten Werkzeughälfte 13 angeordnet.

Dabei besteht die Werkzeughälfte 12 aus einem Konturteil 31 mit einer Konturteil-Formseite 32 und einer Konturteil-Rückseite 33, einer Unterkonstruktion 40 und einem Anschlussteil 35 mit einer Anschlussseite 36 und einer Anschlussteil-Rückseite 37, sowie Beton 20. Das Anschlussteil 35 dient der Aufnahme in einer Hydraulikmaschine, wohingegen das Konturteil 31 eine Hälfte einer Form für ein Werkstück bildet. Dabei ist das Konturteil 31 derart mit der Unterkonstruktion 40 verbunden, dass letztere Aufnahmen 41 hat, die senkrecht mit der Konturteil-Rückseite 33 in Verbindung stehen. Weiterhin liegt eine Verbindung zwischen dem Anschlussteil 35 und der Unterkonstruktion 40 auf der Anschlussteil-Rückseite 37 vor.

Das Konturteil 31, das Anschlussteil 35 und die Unterkonstruktion 40 sind derart in den Beton 20 eingebettet, dass dieser die Unterkonstruktion 40 vollständig bis auf die Verbindungen zum Konturteil 31 und zum Anschlussteil 35 umschließt, sowie das Konturteil 31 nicht auf der Konturteil-Formseite 32 und das Anschlussteil 35 nicht auf der Anschlussseite 36 umschlossen sind. Dabei hat die Konturteil-Formseite 32 einen Überstand H1 zum Beton 20. Dieser Überstand H1 vereinfacht eine Nachbearbeitung des Konturteils 31 oder eine spätere Werkzeugaufbereitung, da ein metallbearbeitendes Werkzeug nicht in Kontakt mit dem Beton 20 kommt. Die Unterkonstruktion 40 dient nunmehr einer Kraftübertragung vom Konturteil 31 oder dem Anschlussteil 35 auf den Beton 20 oder umgekehrt. Gleichzeitig überträgt sie jedoch auch Kräfte direkt zwischen dem Konturteil 31 und dem Anschlussteil 35, ohne sie in den Beton 20 einzuleiten.

Auch die zweite Werkzeughälfte 13 besteht aus einem Konturteil 31 mit einer Konturteil-Formseite 32 und einer Konturteil-Rückseite 33, einer Unterkonstruktion 40 und einem Anschlussteil 35 mit einer Anschlussseite 36 und einer Anschlussteil-Rückseite 37, sowie Beton 20. Das Anschlussteil 35 dient der Aufnahme in einer Hydraulikmaschine, wohingegen das Konturteil 31 eine Hälfte einer Form für ein Werkstück bildet. Dabei ist das Konturteil 31 derart mit der Unterkonstruktion 40 verbunden, dass letztere Aufnahmen 41 hat, die senkrecht mit der Konturteil-Rückseite 33 in Verbindung stehen.

Das Konturteil 31, das Anschlussteil 35 und die Unterkonstruktion 40 sind weiterhin derart in den Beton 20 eingebettet, dass dieser die Unterkonstruktion 40 vollständig bis auf die Verbindungen zum Konturteil 31 umschließt, sowie das Konturteil 31 nicht auf der Konturteil-Formseite 32 und das Anschlussteil 35 nicht auf der Anschlussseite 36 umschlossen sind. Dabei weist die Anschlussseite 36 einen Überstand H2 zum Beton 20 auf. Dies vereinfacht eine Nachbearbeitung des Anschlussteils 35 oder eine spätere Werkzeugaufbereitung. Zwischen dem Konturteil 31 und dem Beton 20 befinden sich weiterhin Spalte 50, die unter anderem alterungs- und schwindungsbedingt auftreten können.

Die Unterkonstruktion 40 dient nunmehr einer Kraftübertragung vom Konturteil 31 auf den Beton 20 oder umgekehrt. Sie ist derart ausgelegt, dass Kräfte im formgebenden Prozess ausschließlich durch sie in den Beton 20 eingeleitet werden können, sodass keine Übertragung von dem Konturteil 31 direkt in den Beton 20 erfolgen muss. Dies ist zwingend erforderlich, da aufgrund der Spalte 50 keine Kraftübertragung vom Konturteil 35 direkt in den Beton 20 möglich ist. Zusätzlich ist das Anschlussteil 35 derart ausgelegt, dass es ein Kraft von der Hydraulikmaschine in die Werkzeughälfte 13 allein übertragen kann, denn aufgrund des Überstands H2 hat der Beton 20 keine Kontaktfläche zur Hydraulikmaschine.

### Bezugszeichenliste

- 10: Formwerkzeug
- 11: Werkzeughälfte
- 12: Erste Werkzeughälfte
- 13: Zweite Werkzeughälfte

- 20: Beton

- 31: Konturteil
- 32: Konturteil-Formseite
- 33: Konturteil-Rückseite

- 35: Anschlussteil
- 36: Anschlussseite
- 37: Anschlussteil-Rückseite

- 40: Unterkonstruktion
- 41: Aufnahme

- 50: Spalt

- H 1: Überstand
- H2: Überstand

## Patentansprüche

1. Verfahren zur Herstellung einer Werkzeughälfte (11) für ein Formwerkzeug (10), die wenigstens teilweise aus Beton (20) gefertigt ist, und ein Konturteil (31) aus vorzugsweise einem Metall, zur Formgebung eines mit der Werkzeughälfte (11) zu fertigenden Werkstücks aufweist, wobei
eine Unterkonstruktion (40) mit dem Konturteil (31) derart verbunden und wenigstens teilweise von Beton (20) umschlossen wird, dass während eines formgebenden Prozesses Kräfte vom Konturteil (31) durch diese auf den Beton (20) übertragbar sind und dass die Unterkonstruktion (40) wenigstens zwei Aufnahmen (41) aufweist, **dadurch gekennzeichnet, dass** die Unterkonstruktion (40) über die Aufnahmen (41) lösbar mit dem Konturteil (31) verbunden wird.

2. Verfahren nach Anspruch 1, **dadurch gekennzeichnet, dass** als Beton (20) ein Standardbeton verwendet wird, dessen Druckfestigkeit sich vorzugsweise in dem Bereich der Temperaturen beim formgebenden Prozess des Formwerkzeugs (10) nicht wesentlich verändert.

3. Verfahren nach einem der vorhergehenden Ansprüche, **dadurch gekennzeichnet, dass** weitere Bauteile in dem Beton (20) angeordnet werden, insbesondere Werkzeugaufnahmeelemente und/oder Führungen und/oder eine Bewehrung und/oder Rohre und/oder Kanäle und/oder Heizschleifen und/oder Lastösen und/oder Gewindebuchsen und/oder Stoßkanten und/oder Temperaturfühler und/oder Feuchtigkeitssensoren.

4. Verfahren nach Anspruch 3, **dadurch gekennzeichnet, dass** die Heizschleifen derart ausgelegt werden, dass diese sowohl für eine Temperierung des Betontrocknungsprozesses als auch für eine spätere Temperierung des Formwerkzeugs (10) beim formgebenden Prozess geeignet sind.

5. Verfahren nach einem der vorhergehenden Ansprüche, **dadurch gekennzeichnet, dass** ein Anschlussteil (35) aus Metall, zur Übertragung von Kräften zwischen der Werkzeughälfte (11) und einer Maschine angeordnet wird.

6. Verfahren nach Anspruch 5, **dadurch gekennzeichnet, dass** das Anschlussteil (35) mit der Unterkonstruktion (40) verbunden wird, sodass diese Kräfte von dem Anschlussteil (35) aufnehmen kann.

7. Werkzeughälfte (11) für ein Formwerkzeug (10), die wenigstens teilweise aus Beton (20) besteht und ein Konturteil (31) aus vorzugsweise einem Metall, zur Formgebung eines mit der Werkzeughälfte (11) zu fertigenden Werkstücks aufweist, wobei eine Unterkonstruktion (40) mit dem Konturteil (31) derart verbunden und wenigstens teilweise von Beton (20) umschlossen ist, dass während eines formgebenden Prozesses Kräfte vom Konturteil (31) durch diese auf den Beton (20) übertragbar sind und dass die Unterkonstruktion (40) wenigstens zwei Aufnahmen (41) aufweist, **dadurch gekennzeichnet, dass** die Unterkonstruktion (40) über die Aufnahmen (41) lösbar mit dem Konturteil (31) verbunden ist.

8. Werkzeughälfte (11) nach Anspruch 7, **dadurch gekennzeichnet, dass** die Unterkonstruktion (40) aus Stahl, Betonstahl, Aluminium, Nichteisen-Metall, Kohlefaser oder aus einer Kombination von diesen besteht.

9. Werkzeughälfte (11) nach einem der Ansprüche 7 oder 8, **dadurch gekennzeichnet, dass** im Beton (20) eine Bewehrung vorhanden ist, die mit der Unterkonstruktion (40) verbunden ist.

10. Werkzeughälfte (11) nach einem der Ansprüche 7 bis 9, **dadurch gekennzeichnet, dass** weitere Bauteile angeordnet sind, insbesondere Werkzeugaufnahmeelemente und/oder Führungen und/oder Rohre und/oder Kanäle und/oder Heizschleifen und/oder Lastösen und/oder Gewindebuchsen und/oder Stoßkanten und/oder Temperaturfühler und/oder Feuchtigkeitssensoren.

11. Werkzeughälfte (11) nach einem der Ansprüche 7 bis 10, **dadurch gekennzeichnet, dass** die Unterkonstruktion (40) aus horizontalen, vertikalen und vorzugsweise auch aus diagonalen Streben besteht.

12. Werkzeughälfte (11) nach einem der Ansprüche 7 bis 11, **dadurch gekennzeichnet, dass** die Aufnahmen (41) senkrecht zu dem Konturteil (31) angeordnet sind.

13. Werkzeughälfte (11) nach einem der Ansprüche 7 bis 12, **dadurch gekennzeichnet, dass** die Unterkonstruktion (40) lösbar mit dem Konturteil (31) verbunden und das Konturteil (31) derart von Beton umschlossen ist, dass dieses entnehmbar und gegen ein anderes Konturteil (31) austauschbar ist.

14. Werkzeughälfte (11) nach einem der Ansprüche 7 bis 13, **dadurch gekennzeichnet, dass** ein Anschlussteil (35) aus Metall, zur Übertragung von Kräften zwischen der Werkzeughälfte (11) und einer Maschine angeordnet ist.

## Claims

1. Process for producing a mould half (11) for a mould (10) which is made, at least partially, of concrete (20), and has a contoured portion (31) preferably made of metal for shaping a workpiece to be manufactured with the mould half (11), wherein a substructure (40) is connected to the contoured portion (31) and at least partially surrounded by concrete (20) in such a way that, during a shaping process, forces from the contoured portion (31) are transferable therethrough to the concrete (20), and that the substructure (40) exhibits at least two slots (41), **characterised in that** the substructure (40) is detachably connected to the contoured portion (31) via the slots (41).

2. Process according to Claim 1, **characterised in that** standard concrete is used as the concrete (20), whose compressive strength preferably does not vary significantly across the temperature range present during the shaping process of the mould (10).

3. Process according to one of the preceding claims, **characterised in that** further components are arranged in the concrete (20), in particular tool holder elements and/or guides and/or a reinforcement and/or pipes and/or channels and/or heating loops and/or shackles, and/or threaded bushes and/or abutting edges and/or temperature sensors and/or moisture sensors.

4. Process according to Claim 3, **characterised in that** the heating loops are designed such that they are suitable both for controlling the temperature of the concrete drying process as well as for subsequently controlling the temperature of the mould (10) during the shaping process.

5. Process according to one of the preceding claims, **characterised in that** a connector (35) made of metal is arranged for transmitting forces between the mould half (11) and a motor.

6. Process according to Claim 5, **characterised in that** the connector (35) is connected to the substructure (40) so that these forces from the connector (35) can be absorbed.

7. Mould half (11) for a mould (10) which is made, at least partially, of concrete (20), and has a contoured portion (31) preferably made of metal for shaping a workpiece to be manufactured with the mould half (11), wherein a substructure (40) is connected to the contoured portion (31) and at least partially enclosed by concrete (20) in such a way that, during a shaping process, forces from the contoured portion (31) are transferable therethrough to the concrete (20), and that the substructure (40) has at least two slots (41), **characterised in that** the substructure (40) is detachably connected to the contoured portion (31) via the slots (41).

8. Mould half (11) according to Claim 7, **characterised in that** the substructure (40) is made of steel, concrete, steel, aluminium, non-ferrous metal, carbon fibre or a combination of these.

9. Mould half (11) according to any one of Claims 7 or 8, **characterised in that** a reinforcement made of concrete (20) is present which is connected to the substructure (40).

10. Mould half (11) according to any one of Claims 7 to 9, **characterised in that** further components are arranged, in particular tool holder elements and/or guides and/or a reinforcement and/or pipes and/or channels and/or heating loops and/or shackles, and/or threaded bushes and/or abutting edges and/or temperature sensors and/or moisture sensors.

11. Mould half (11) according to any one of Claims 7 to 10, **characterised in that** the substructure (40) consists of horizontal, vertical and preferably also diagonal struts.

12. Mould half (11) according to any one of Claims 7 to 11, **characterised in that** the slots (41) are arranged to be perpendicular to the contoured portion (31).

13. Mould half (11) according to any one of Claims 7 to 12, **characterised in that** the substructure (40) is detachably connected to the contoured portion (31) and the contoured portion (31) is enclosed by concrete in such a way that it can be removed and can be replaced by another contoured portion (31).

14. Mould half (11) according to any one of Claims 7 to 13, **characterised in that** a connector (35) made of metal is arranged for transmitting forces between the mould half (11) and a motor.

## Revendications

1. Procédé de fabrication d'une moitié d'outil (11) pour un outil de formage (10), laquelle est fabriquée au moins en partie en béton (20), et pour une partie formant contour (31) de préférence en un métal, en vue du formage d'une pièce à fabriquer avec la moitié d'outil (11),
une infrastructure (40) étant assemblée à la partie formant contour (31) et étant entourée au moins partiellement de béton (20) de telle sorte que, pendant un processus de formage, des forces peuvent être transmises de la partie formant contour (31), à travers celle-ci, au béton (20) et que l'infrastructure (40) comporte au moins deux logements (41),
**caractérisé en ce que** l'infrastructure (40) est assemblée à la partie formant contour (31) de manière amovible par l'intermédiaire des logements (41).

2. Procédé selon la revendication 1, **caractérisé en ce que** l'on utilise comme béton (20) un béton standard dont la résistance à la pression ne varie de préférence pas essentiellement dans la plage des températures lors du processus de formage de l'outil de formage (10).

3. Procédé selon l'une des revendications précédentes, **caractérisé en ce que** d'autres éléments sont agencés dans le béton (20), notamment des éléments de logement d'outil et/ou des guides et/ou une armature et/ou des tuyaux et/ou des canaux et/ou des boucles de chauffage et/ou des oeillets porte-charges et/ou des douilles taraudées et/ou des arêtes de bord et/ou des capteurs de température et/ou des capteurs d'humidité.

4. Procédé selon la revendication 3, **caractérisé en ce que** les boucles de chauffage sont placées de telle sorte qu'elles conviennent aussi bien à tempérer le processus de séchage de béton qu'à tempérer ultérieurement l'outil de formage (10) lors du processus de formage.

5. Procédé selon l'une des revendications précédentes, **caractérisé en ce qu'**une partie formant raccord (35) en métal est agencée entre la moitié d'outil (11) et une machine pour la transmission de forces.

6. Procédé selon la revendication 5, **caractérisé en ce que** la partie formant raccord (35) est assemblée à l'infrastructure (40) de telle sorte que ces forces peuvent être absorbées par la partie formant raccord (35).

7. Moitié d'outil (11) pour un outil de formage (10), laquelle est constituée au moins en partie en béton (20) et comporte une partie formant contour (31) de préférence en un métal, en vue du formage d'une pièce à fabriquer avec la moitié d'outil (11), une infrastructure (40) étant assemblée à la partie formant contour (31) et étant entourée au moins partiellement de béton (20) de telle sorte que, pendant un processus de formage, des forces peuvent être transmises de la partie formant contour (31), à travers celle-ci, au béton (20) et que l'infrastructure (40) comporte au moins deux logements (41),
**caractérisée en ce que** l'infrastructure (40) est assemblée à la partie formant contour (31) de manière amovible par l'intermédiaire des logements (41).

8. Moitié d'outil (11) selon la revendication 7, **caractérisée en ce que** l'infrastructure (40) est en acier, en acier pour béton, en aluminium, en métal non ferreux, en fibres de carbone ou en une combinaison de ceux-ci.

9. Moitié d'outil (11) selon l'une des revendications 7 ou 8, **caractérisée en ce qu'**il y a dans le béton (20) une armature qui est assemblée à l'infrastructure (40).

10. Moitié d'outil (11) selon l'une des revendications 7 à 9, **caractérisée en ce que** d'autres éléments sont agencés, notamment des éléments de logement d'outils et/ou des guides et/ou des canaux et/ou des boucles de chauffage et/ou des oeillets porte-charges et/ou des douilles taraudées et/ou des arêtes de bord et/ou des capteurs de température et/ou des capteurs d'humidité.

11. Moitié d'outil (11) selon l'une des revendications 7 à 10, **caractérisée en ce que** l'infrastructure (40) est constituée d'entretoises horizontales, verticales et de préférence aussi diagonales.

12. Moitié d'outil (11) selon l'une des revendications 7 à 11, **caractérisée en ce que** les logements (41) sont agencés perpendiculairement à la partie formant contour (31).

13. Moitié d'outil (11) selon l'une des revendications 7 à 12, **caractérisée en ce que** l'infrastructure (40) est assemblée à la partie formant contour (31) de manière amovible et la partie formant contour (31) est entourée par du béton de telle sorte que celle-ci peut être retirée et remplacée par une autre partie formant contour (31).

14. Moitié d'outil (11) selon l'une des revendications 7 à 13, **caractérisée en ce qu'**une partie formant raccord (35) en métal est agencée entre la moitié d'outil (11) et la machine pour la transmission de forces.
